(19) **Europäisches Patentamt**

**European Patent Office**

**Office européen des brevets**

(11) Publication number: **0 404 481 B1**

(12) **EUROPEAN PATENT SPECIFICATION**

(45) Date of publication of patent specification: **14.12.94**   (51) Int. Cl.⁵: **C03B 11/08**

(21) Application number: **90306615.7**

(22) Date of filing: **18.06.90**

(54) **Die for press-molding optical element.**

(30) Priority: **20.06.89 JP 157788/89**

(43) Date of publication of application:
**27.12.90 Bulletin 90/52**

(45) Publication of the grant of the patent:
**14.12.94 Bulletin 94/50**

(84) Designated Contracting States:
**DE FR GB**

(56) References cited:
**EP-A- 0 191 618
US-A- 4 629 487
US-A- 4 721 518**

(73) Proprietor: **MATSUSHITA ELECTRIC INDUSTRI-
AL CO., LTD.
1006, Kadoma
Kadoma-shi, Osaka-fu 571 (JP)**

(72) Inventor: **Umetani, Makoto
5-chome, 27-20, 301, Minamitanabe
Higashisumiyoshi-ku, Osaka-shi 546 (JP)**
Inventor: **Kuribayashi, Kiyoshi
17 -2, Uzumasa nakamachi
Neyagawa-shi, Osaka-fu 572 (JP)**
Inventor: **Monji, Hideto
2-25-4, Hannan-cho,
Abeno-ku
Osaka-shi, Osaka-fu 545 (JP)**

(74) Representative: **Dawson, Elizabeth Ann et al
A.A. THORNTON & CO.
Northumberland House
303-306 High Holborn
London WC1V 7LE (GB)**

**Description**

BACKGROUND OF THE INVENTION

1. Field of the Invention

The present invention relates to a die for press-molding optical elements with high precision.

2. Description of the Prior Art

When manufacturing an optical element such as an aspherical glass lens with high precision, hitherto, the glass was directly ground and machined by a machine with extremely high performance. In such conventional method, it took a very long time to manufacture each lens, and so it was not suited to mass production.

Recently, as a method of manufacturing optical elements with high precision in quantities and at low cost, the press-molding method has been noticed, and variously devised. To mold optical elements with high precision by press-molding, durable dies with high precision are needed. In other words, the press-molding die for optical elements must be stable both thermally and chemically at high temperature, resistant to oxidation, inert to materials of the optical element, and excellent in mechanical strength so that the die shape may not be deformed during press-molding. To the contrary, the die must be excellent in machinability so as to be machined precisely and easily.

Conventionally, as the die material satisfying to a certain extent the abovementioned necessary conditions, silicon carbide (SiC) and silicon nitride ($Si_3N_4$) as disclosed in Japanese Laid-open Patent No. 52-45613 have been used. Besides, titanium carbide (TiC) mixed with metals as disclosed in Japanese Laid-open Patent No. 59-121126 may be considered also as the die material. The dies made of such materials are high in strength, but these metal materials are likely to react with lead (Pb) or alkali components contained in the optical elements, and so the dies may be adhered to the optical elements after several times of press-moldings, and become unusable. Besides, since these dies are very hard, or excellent in mechanical strength, the diamond tool used for machining the dies is worn out quickly, which makes it difficult to machine the dies precisely.

More recently, it has come to be possible to mass-produce optical elements by press-molding, using the press-molding die as disclosed in Japanese Patent Publication No. 62-28091 as shown in Fig. 1. This die is composed of a base material 11 which is precision machined to an inverted shape of an optical element, and a surface protective layer 12 which is formed on the base material 11 so as not to spoil the surface shape of the base material. The die base material 11 is made of a cemented carbide mainly composed of WC which is excellent in heat resistance and mechanical strength, so as to maintain the strength of the die. The press surface of the base material 11 is precisely machined to the inverted shape of the optical element. The base material 11 is coated with a platinum alloy thin film as the surface protective layer 12 which is thermally and chemically stable at high temperature, resistant to oxidation, inert to the optical element material, and excellent in mechanical strength so as not to deform the die shape during press-molding. It is intended to use the die repeatedly to press-mold optical elements. In this die, however since it took a long time to precisely machine the base material 11 made of the cemented carbide mainly composed of WC, so that the die manufacturing cost was very high, and the optical elements could not be mass-produced at low cost.

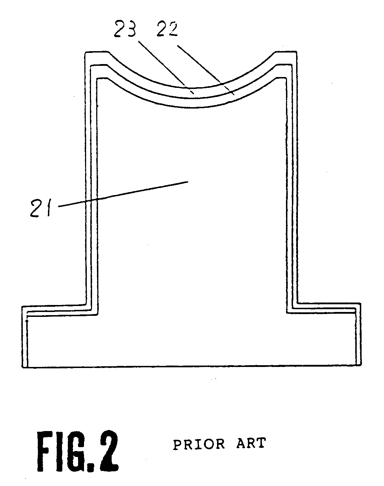

A new die as shown in Fig. 2 is proposed hence in order to greatly shorten the die machining time as disclosed in Japanese Laid-open Patent No. 60-140824. This die is composed of a base material 21 roughly machined to an inverted shape of an optical element, an intermediate layer 22 precisely machined on the base material 21, and a surface protective layer 23 formed so as not to spoil the surface shape of the intermediate layer 22. The die base material 21 is made of tungsten carbide, zirconia, cermet, silicon nitride or silicon carbide excellent in heat resistance and mechanical strength in order to maintain the strength of the die. The press surface of the base material 21 is roughly machined to the inverted shape of the optical element. A gold, copper, nickel or platinum-gold, platinum-copper, or platinum-nickel alloy thin film with the platinum content of 60 wt.% or less excellent in cutting processability and grinding processability is formed on the base material 21 as the intermediate layer 22. The intermediate layer 22 is precisely machined to the inverted shape of the optical element, and then coated with the surface protective layer 23 which is a platinum alloy thin film that is stable thermally and chemically at high temperature, resistant to oxidation, inert to optical element materials, and excellent in mechanical strength. Therefore, the die can be used repeatedly to press-mold optical elements, while the die machining time is shortened remarkably. Therefore, by using this die, optical elements with higher precision can be mass-produced at lower cost. In this die, however, when the press-molding operation is repeated many times, the intermediate layer 22 is separated from the base material 21 because the adhesion between the base material 21 and the intermediate layer 22 is not so strong, so that a large number of optical elements cannot be press-molded by one die. Therefore, in order to realize manufacturing of optical elements with higher precision at lower cost, it is essentially required to further reduce the die machining time, and to enhance the adhesion strength between the base material and the intermediate layer thereby to improve the durability of the die.

It is hence a primary object of the invention to provide a press-molding die for producing optical elements with high precision in large quantity and at low cost.

To achieve the above object, the present invention provides a die for press-molding an optical element, comprising: a base material made of a material excellent in heat resistance, heat shock resistance and strength at high temperature; an intermediate layer excellent in grinding machinability and cutting machinability, formed on the base material; and a surface protective layer made of a metal thin film excellent in heat resistance and strength at high temperature and less reactive to a material of the optical element, formed on the intermediate layer; characterized in that the intermediate layer comprises a Ni-P alloy or Ni-B alloy thin film.

The surface layer is preferably excellent in mechanical strength so as not to deform the die shape during press-molding.

In this constitution, the machining time for producing the die can be further shortened, and by press-molding using this die, optical elements with high precision can be mass-produced at low cost.

Thus, the invention also provides a method of press-molding an optical element using a pair of dies as defined above.

Preferably the die is provided with a thin film of metal, carbide, nitride or oxide formed on the base material in order to enhance the adhesion strength between the base material and the intermediate layer.

In this constitution, the die can be easily machined precisely, and the durability of the die is enhanced at the same time. Therefore, by press-molding using this die, optical elements with high precision may be mass-produced at low cost.

Embodiments of the invention will now be described by way of example only and with reference to the accompanying drawings in which:

Fig. 1 and Fig. 2 are schematic diagrams showing sectional views of conventional press-molding dies for optical elements,

Fig. 3 is a schematic diagram showing a sectional structure of a press-molding die for optical elements capable of being easily machined precisely according to the invention,

Fig. 4 is a schematic diagram of a press-molding machine used in an embodiment, and

Fig. 5 is a schematic diagram showing a sectional structure of a press-molding die for optical elements capable of being easily machined precisely and further enhanced in durability according to a preferred embodiment of the invention.

## DESCRIPTION OF THE PREFERRED EMBODIMENTS

Hitherto, a lens system was composed by combining several spherical lenses in order to correct various aberrations of each spherical lens. On the other hand, an aspherical lens can correct its own aberration. When such aspherical lens is used in the lens system, the number of lenses can be notably decreased.

The aspherical lenses were so far manufactured by directly machining the lens material by a machine with a very high performance, so that it took a very long time in machining, and so mass production of the aspherical lenses was impossible.

The present invention, in this background, presents a press-molding die which can be machined easily and precisely, and which makes it possible to mass-product aspherical glass lenses by press-molding.

Referring now to the drawings, preferred embodiments of the invention are described in detail below.

Embodiment 1

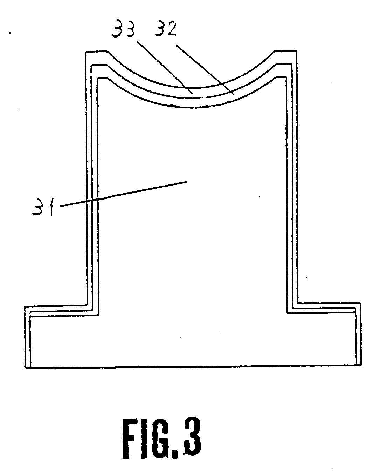

A schematic diagram of sectional structure of a press-molding die for optical elements in an embodiment of the invention is shown in Fig. 3, in which numeral 31 is a roughly machined base material, 32 is an intermediate layer which is a precisely machined NiP or NiB alloy thin film, and 33 is a surface protective layer.

The base material 31 is made of a cermet mainly composed of titanium nitride (TiN), titanium carbide (TiC), alumina ($Al_2O_3$), or chromium carbide ($Cr_3C_2$), or a cemented carbide mainly composed of tungsten carbide (WC), in a columnar form of 20 mm in diameter and 6 mm in thickness. These materials are excellent in heat resistance, heat shock resistance and mechanical strength at high temperature. The base material was roughly machined into a shape of each of a pair of upper and lower dies with concave shapes having the curvature radii of 46 mm and 200 mm, respectively.

For the purpose of comparison, thin films of various materials, were formed on the surface of samples of machined base material 31. The various materials were platinum (Pt), gold (Au), copper (Cu) and nickel (Ni), and thin films of Pt-Au, Pt-Cu, Pt-Ni, nickel-phosphorus (Ni-p) and nickel-boron (Ni-B) alloy. In each case this layer was formed as the intermediate layer 32 for precision machining. The thin film was deposited by sputtering method or electroless plating method to be a thickness of about 5 $\mu$m. The intermediate layer 32 was cut by a diamond tool precisely into a desired shape.

Finally, as the surface protective layer 33, a thin film of iridium-ruthenium-tantalum (Ir-Ru-Ta) alloy was formed on the precisely machined intermediate layer 32 by sputtering to be a thickness of about 3 $\mu$m.

The machining time required for precision machining the die, the shape precision and surface roughness of the die are summarized in Table 1. The manufacturing cost of each die assuming the direct precision machining of the base material 31 without forming the intermediate layer 32 to be 100% is also shown in Table 1.

In Table 1, (a), (b), (c), (d) and (e) denote the machinability of the intermediate layer 32 of the die whose base material 31 is made of a cermet mainly composed of TiN, a cermet mainly composed of TiC, a cermet mainly composed of $Al_2O_3$, a cermet mainly composed of $Cr_3C_2$, and a cemented carbide mainly composed of WC, respectively.

4

# Table 1  Die Machinability

## (a) Die with the base material made of cermet mainly composed of TiN

| Intermediate layer | | Machining time | Shape precision (rms) | Surface roughness (rms) | Cost |
|---|---|---|---|---|---|
| None | | 40 hr | 0.05 λ | 40 Å | 100 % |
| Pt | | 12 | 0.04 | 30 | 35 |
| Au | | 4 | 0.02 | 25 | 13 |
| Cu | | 4 | 0.02 | 25 | 13 |
| Ni | | 5 | 0.02 | 25 | 15 |
| Pt-Au | 20wt.%Pt | 4.5 | 0.02 | 25 | 14 |
| | 60wt.%Pt | 6 | 0.02 | 25 | 18 |
| | 70wt.%Pt | 9 | 0.04 | 30 | 25 |
| Pt-Cu | 20wt.%Pt | 5 | 0.02 | 25 | 15 |
| | 60wt.%Pt | 6 | 0.02 | 25 | 18 |
| | 70wt.%Pt | 9 | 0.04 | 30 | 25 |
| Pt-Ni | 20wt.%Pt | 5 | 0.02 | 25 | 15 |
| | 60wt.%Pt | 6 | 0.02 | 25 | 18 |
| | 70wt.%Pt | 10 | 0.04 | 30 | 30 |
| Ni-P ( 5wt.%P) | | 4 | 0.02 | 25 | 13 |
| Ni-P (10wt.%P) | | 2 | 0.01 | 20 | 10 |
| Ni-B ( 5wt.%B) | | 4 | 0.02 | 25 | 13 |
| Ni-B (10wt.%B) | | 2 | 0.01 | 20 | 10 |

(measured at λ=633 nm)

5

EP 0 404 481 B1

## Table 1  Die Machinability

(b) Die with the base material made of cermet mainly
   composed of TiC

| Intermediate layer | | Machining time | Shape precision (rms) | Surface roughness (rms) | Cost |
|---|---|---|---|---|---|
| None | | 40 hr | 0.05 l | 40 Å | 100 % |
| Pt | | 12 | 0.04 | 30 | 35 |
| Au | | 4 | 0.02 | 25 | 13 |
| Cu | | 4 | 0.02 | 25 | 13 |
| Ni | | 5 | 0.02 | 25 | 15 |
| Pt-Au | 20wt.%Pt | 4.5 | 0.02 | 25 | 14 |
| | 60wt.%Pt | 6 | 0.02 | 25 | 18 |
| | 70wt.%Pt | 9 | 0.04 | 30 | 25 |
| Pt-Cu | 20wt.%Pt | 5 | 0.02 | 25 | 15 |
| | 60wt.%Pt | 6 | 0.02 | 25 | 18 |
| | 70wt.%Pt | 9 | 0.04 | 30 | 25 |
| Pt-Ni | 20wt.%Pt | 5 | 0.02 | 25 | 15 |
| | 60wt.%Pt | 6 | 0.02 | 25 | 18 |
| | 70wt.%Pt | 10 | 0.04 | 30 | 30 |
| Ni-P ( 5wt.%P) | | 4 | 0.02 | 25 | 13 |
| Ni-P (10wt.%P) | | 2 | 0.01 | 20 | 10 |
| Ni-B ( 5wt.%B) | | 4 | 0.02 | 25 | 13 |
| Ni-B (10wt.%B) | | 2 | 0.01 | 20 | 10 |

(measured at $\lambda$=633 nm)

6

## Table 1  Die Machinability

(c) Die with the base material made of cermet mainly composed of $Al_2O_3$

| Intermediate layer | | Machining time | Shape precision (rms) | Surface roughness (rms) | Cost |
|---|---|---|---|---|---|
| None | | 60hr | 0.08 λ | 70 λ | 100 % |
| Pt | | 12 | 0.04 | 30 | 25 |
| Au | | 4 | 0.02 | 25 | 10 |
| Cu | | 4 | 0.02 | 25 | 10 |
| Ni | | 5 | 0.02 | 25 | 12 |
| Pt-Au | 20wt.%Pt | 4.5 | 0.02 | 25 | 11 |
| | 60wt.%Pt | 6 | 0.02 | 25 | 15 |
| | 70wt.%Pt | 9 | 0.04 | 30 | 20 |
| Pt-Cu | 20wt.%Pt | 5 | 0.02 | 25 | 12 |
| | 60wt.%Pt | 6 | 0.02 | 25 | 15 |
| | 70wt.%Pt | 9 | 0.04 | 30 | 20 |
| Pt-Ni | 20wt.%Pt | 5 | 0.02 | 25 | 12 |
| | 60wt.%Pt | 6 | 0.02 | 25 | 15 |
| | 70wt.%Pt | 10 | 0.04 | 30 | 23 |
| Ni-P ( 5wt.%P) | | 4 | 0.02 | 25 | 10 |
| Ni-P (10wt.%P) | | 2 | 0.01 | 20 | 7 |
| Ni-B ( 5wt.%B) | | 4 | 0.02 | 25 | 10 |
| Ni-B (10wt.%B) | | 2 | 0.01 | 20 | 7 |

(measured at λ=633 nm)

7

Table 1  Die Machinability

(d) Die with the base material made of cermet mainly composed of $Cr_3C_2$

| Intermediate layer | | Machining time | Shape precision (rms) | Surface roughness (rms) | Cost |
|---|---|---|---|---|---|
| None | | 60hr | 0.08 $l$ | 70 $\lambda$ | 100 % |
| Pt | | 12 | 0.04 | 30 | 25 |
| Au | | 4 | 0.02 | 25 | 10 |
| Cu | | 4 | 0.02 | 25 | 10 |
| Ni | | 5 | 0.02 | 25 | 12 |
| Pt-Au | 20wt.%Pt | 4.5 | 0.02 | 25 | 11 |
| | 60wt.%Pt | 6 | 0.02 | 25 | 15 |
| | 70wt.%Pt | 9 | 0.04 | 30 | 20 |
| Pt-Cu | 20wt.%Pt | 5 | 0.02 | 25 | 12 |
| | 60wt.%Pt | 6 | 0.02 | 25 | 15 |
| | 70wt.%Pt | 9 | 0.04 | 30 | 20 |
| Pt-Ni | 20wt.%Pt | 5 | 0.02 | 25 | 12 |
| | 60wt.%Pt | 6 | 0.02 | 25 | 15 |
| | 70wt.%Pt | 10 | 0.04 | 30 | 23. |
| Ni-P ( 5wt.%P) | | 4 | 0.02 | 25 | 10 |
| Ni-P (10wt.%P) | | 2 | 0.01 | 20 | 7 |
| Ni-B ( 5wt.%B) | | 4 | 0.02 | 25 | 10 |
| Ni-B (10wt.%B) | | 2 | 0.01 | 20 | 7 |

(measured at $\lambda$=633 nm)

8

EP 0 404 481 B1

## Table 1  Die Machinability

(e) Die with the base material made of cemented carbide mainly composed of WC.

| Intermediate layer | | Machining time | Shape precision (rms) | Surface roughness (rms) | Cost |
|---|---|---|---|---|---|
| None | | 40 hr | 0.05 λ | 40 Å | 100 % |
| Pt | | 12 | 0.04 | 30 | 35 |
| Au | | 4 | 0.02 | 25 | 13 |
| Cu | | 4 | 0.02 | 25 | 13 |
| Ni | | 5 | 0.02 | 25 | 15 |
| Pt-Au | 20wt.%Pt | 4.5 | 0.02 | 25 | 14 |
| | 60wt.%Pt | 6 | 0.02 | 25 | 18 |
| | 70wt.%Pt | 9 | 0.04 | 30 | 25 |
| Pt-Cu | 20wt.%Pt | 5 | 0.02 | 25 | 15 |
| | 60wt.%Pt | 6 | 0.02 | 25 | 18 |
| | 70wt.%Pt | 9 | 0.04 | 30 | 25 |
| Pt-Ni | 20wt.%Pt | 5 | 0.02 | 25 | 15 |
| | 60wt.%Pt | 6 | 0.02 | 25 | 18 |
| | 70wt.%Pt | 10 | 0.04 | 30 | 30 |
| Ni-P ( 5wt.%P) | | 4 | 0.02 | 25 | 13 |
| Ni-P (10wt.%P) | | 2 | 0.01 | 20 | 10 |
| Ni-B ( 5wt.%B) | | 4 | 0.02 | 25 | 13 |
| Ni-B (10wt.%B) | | 2 | 0.01 | 20 | 10 |

(measured at λ=633 nm)

In Table 1, the machining time means the time required for precision machining, and the shape precision and surface roughness were measured for dies each having the best surface condition. As evident from Table 1, regardless of the material of the base material 31, the machining time required for precision machining of the intermediate layer 32 is constant. The machining time depends on the material of the intermediate layer 32. The die manufacturing cost does not depend on the cost of the material of the intermediate layer 32 or the die structure, but it is proportional to the precision machining time. Consequently, the manufacturing cost is reduced when a material of better machinability is used for the intermediate layer 32. When Pt, Au, Cu, Ni, Pt-Au, Pt-Cu or Pt-Ni was used for the intermediate layer 32, the die manufacturing cost is 35% or less as compared with that of the die without the intermediate layer 32. In the best case, when Au or Cu was used for the intermediate layer 32, the manufacturing cost is 10% or 13% as compared with that of the die without the intermediate layer 32, and a notable cost reduction is realized. However, when Au or Cu is used for the intermediate layer 32, since Au or Cu is not excellent in the mechanical strength, the machined surface may be easily damaged and the shape precision may be

9

degraded unless handled very carefully after precision machining. Furthermore, although the rate of the cost of the intermediate layer material to the total die manufacturing cost does not differ so much depending on the material, the material cost of the intermediate layer should be considered in mass production of dies. Therefore, the material for the intermediate layer 32 is desired to be easy to be machined precisely and as inexpensive as possible.

As shown in Table 1, in the case of the die having Ni-P or Ni-B intermediate layer 32, the precision machining time is at most 4 hours, and the shape precision of 0.02 $\lambda$ or less and the surface roughness of 25 Å or less can be obtained. Also, the die manufacturing cost is 7% to 13% as compared with that of the die without intermediate layer 32. This means that the die manufacturing cost can be further reduced as compared with that of the die having Au or Cu intermediate layer 32.

Incidentally, Ni-P or Ni-B has the micro Vickers hardness in the range from 500 Hv to 1000 Hv as shown in Table 2, so that the mechanical strength of NiP or NiB is considerably higher as compared with Au or Cu. In other words, the Ni-P or Ni-B film is more resistant to scratches than Au or Cu . Accordingly, the shape precision of the precision machined surface is hardly degraded by press-molding

Table 2

| Hardness of Intermediate layer | |
|---|---|
| Intermediate layer material | Micro vickers hardness (Hv) |
| Au | 50 or less |
| Cu | 50~100 |
| Ni-P | 500~1000 |
| Ni-B | 500~1000 |

Below are explained the results of press-molding using the dies manufactured in the above-described manner.

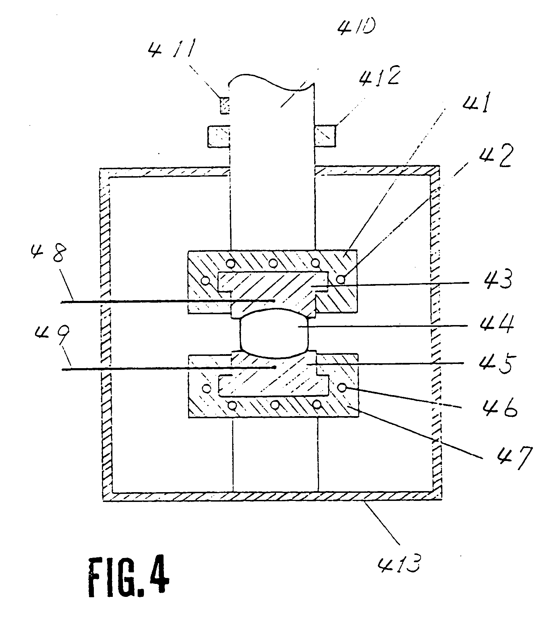

A schematic diagram of a machine used for press-molding is shown in Fig. 4. The press-molding machine has an upper fixing block 41 and a lower fixing block 47 within a covering 413 for shutting off ambient air and controlling the atmosphere within the machine. An upper die 43 is fixed to the upper fixing block 41, and a lower die 45 to the lower fixing block 47. The dies 43 and 45 are indirectly heated by heaters 42 and 46 inserted in the upper and lower fixing blocks 41 and 47, respectively. The temperature of the dies 43, 45 is measured by thermocouples 48, 49 inserted in the respective dies, and controlled according to the measured results. For pressurization, only the upper fixing block 41 is pressed from the above by a plunger 410 until reaching the position preset in a positioning sensor 411.

First of all, a spherical glass 44 with the radius of 10 mm composed of 70 wt.% of lead oxide (PbO), 27 wt.% of silica (SiO) and the rest of traces was put on the lower die 45, and the upper die 43 fixed to the upper fixing block 41 was put thereon. After the die temperature was raised to 520°C, the spherical glass 44 was pressed between the upper and lower dies for 2 minutes with a pressing pressure of about 40 kg/cm$^2$ in nitrogen atmosphere. Thereafter, the upper and lower dies were cooled to 300°C, and the press-mold aspherical glass lens was taken out of the die. After repeating this process 10,000 times, the upper die 43 was taken out of the press-molding machine, and the surface roughness (rms, Å) of the die and the die precision were measured.

The press test results are shown in Table 3. This table shows the initial shape precision and initial surface roughness of each die right after manufactured, and the shape precision and surface roughness of each die after 10,000 times of press-moldings. In Table 3, (a), (b), (c), (d), and (e) refer to the press test results by changing the material of the intermediate layer 32 of the dies whose base materials are made of cermet mainly composed of TiN, a cermet mainly composed of TiC, a cermet mainly composed of $Al_2O_3$, a cermet mainly composed of $Cr_3C_2$, and a cemented carbide mainly composed of WC, respectively.

Table 3   Press Test Results

(a) Die with the base material made of cermet mainly composed of TiN

| Intermediate layer | | Initial shape precision (rms) | Initial surface roughness (rms) | Shape precision after pressing (rms) | Surface roughness after pressing (rms) |
|---|---|---|---|---|---|
| None | | 0.05 $l$ | 40 Å | 0.05 $l$ | 40 Å |
| Pt | | 0.04 | 30 | 0.04 | 30 |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at $\lambda$=633 nm)

Table 3  Die Machinability

(b) Die with the base material made of cermet mainly composed of TiC

| Intermediate layer | | Initial shape precision (rms) | Initial surface roughness (rms) | Shape precision after pressing (rms) | Surface roughness after pressing (rms) |
|---|---|---|---|---|---|
| None | | 0.05 $\lambda$ | 40 $\AA$ | 0.05 $\lambda$ | 40 $\AA$ |
| Pt | | 0.04 | 30 | 0.04 | 30 |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at $\lambda$=633 nm)

## Table 3   Die Machinability

**(c) Die with the base material made of cermet mainly composed of $Al_2O_3$**

| Intermediate layer | | Initial shape precision (rms) | Initial surface roughness (rms) | Shape precision after pressing (rms) | Surface roughness after pressing (rms) |
|---|---|---|---|---|---|
| None | | 0.05 $l$ | 40 $Å$ | 0.05 $l$ | 40 $Å$ |
| Pt | | 0.04 | 30 | 0.04 | 30 |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at $\lambda$=633 nm)

EP 0 404 481 B1

## Table 3  Die Machinability

**(d) Die with the base material made of cermet mainly composed of $Cr_3C_2$**

| Intermediate layer | | Initial shape precision (rms) | Initial surface roughness (rms) | Shape precision after pressing (rms) | Surface roughness after pressing (rms) |
|---|---|---|---|---|---|
| None | | 0.05 λ | 40 Å | 0.05 λ | 40 Å |
| Pt | | 0.04 | 30 | 0.04 | 30 |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at λ=633 nm)

14

Table 3   Die Machinability

(e) Die with the base material made of cemented carbide mainly composed of WC.

| Intermediate layer | | Initial shape precision (rms) | Initial surface roughness (rms) | Shape precision after pressing (rms) | Surface roughness after pressing (rms) |
|---|---|---|---|---|---|
| None | | 0.05 λ | 40 Å | 0.05 λ | 40 Å |
| Pt | | 0.04 | 30 | 0.04 | 30 |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at λ=633 nm)

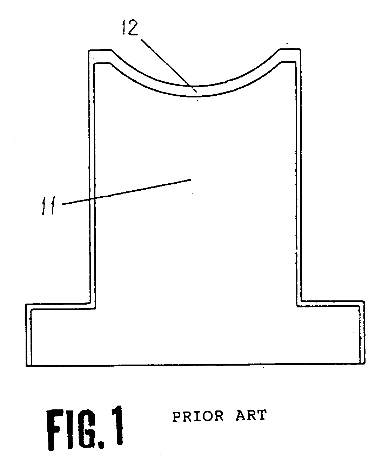

As clear from Table 3, after 10,000 times of press-molding, all dies were free from roughness of the die surface, and were proved to have durability sufficient for mass production of optical elements. Therefore, the life of the die using the Ni-P or Ni-B film as the intermediate layer 32 is known to be almost the same as that of the die without the intermediate layer 32, or the die using the Pt, Au, Cu, Ni, Pt-Au, Pt-Cu or Pt-Ni film as the intermediate layer 32, that is, the conventional die shown in Fig. 1 or Fig. 2.

It is hence known that the die of the invention having the Ni-P or Ni-B intermediate layer 32 has the durability sufficient for mass production of optical elements, and is suitable for easy and precision machining, as compared with the conventional die having no intermediate layer or the conventional die having an intermediate layer made of Pt, Au, Cu, Ni, Pt-Au, Pt-Cu or Pt-Ni. Therefore, when the intermediate layer 32 is made of Ni-P or Ni-B, the die with high strength, superior durability and long life can be easily and inexpensively produced, and by press-molding using this die, optical elements with high precision can be mass- produced at lower cost.

However, as the number of press-molding operations increases, all dies were separated at the boundary of the base material 31 and the intermediate layer 32 until 20,000 times of press-moldings. The cause of this peeling was unsatisfactory adhesion between the base material 31 and the intermediate layer 32. It means that the bonding of the base material 31 and the intermediate layer 32 is not chemical but is physical. It is hence expected that the die life be extended by producing a die in such a structure as to have a thin film containing a chemical bond between the base material 31 and the intermediate layer 32.

Such modified embodiment is described as Embodiment 2 below.

Embodiment 2

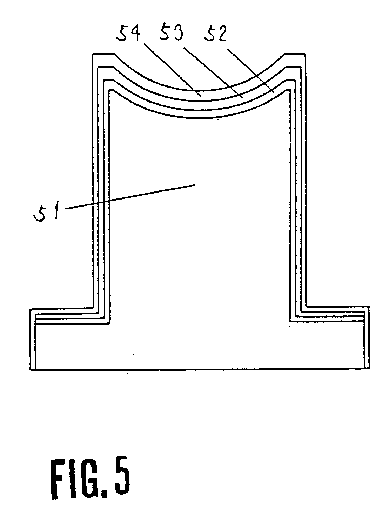

Fig. 5 shows a sectional structural drawing of the die in a modified embodiment of the invention. The die comprises a roughly machined base material 51, a thin film 52 formed on the base material 51 for enhancing the adhesion strength between the base material and an intermediate layer, a precisely machined intermediate layer 53 formed on the thin film 52, and a surface protective layer 54 for protecting the entire die.

The base material 51 of the die is made of a cermet mainly composed of TiN, Tic, $Al_2O_3$ or $Cr_3O_2$, or a cemented carbide mainly composed of WC, in a columnar form of 20 mm in diameter and 6 mm in thickness. The base material 51 was roughly machined into each of a pair of upper and lower dies with the concave shape of 46 mm and 200 mm in curvature radius, respectively.

As the thin film 52 with an excellent adhesion to the base material 51, a thin film of nickel-cobalt (Ni-Co) alloy was formed on the roughly machined surface of the base material 51 in a thickness of about 1 $\mu$m by electro-plating method. The surface of the thin film 52 is almost the same in shape precision as the roughly machined surface of the base material 51.

In succession, and for the purpose of comparison, as the intermediate layer 53 for precision machining, a thin film of Pt, Au, Cu, Ni or Pt-Au, Pt-Cu, Pt-Ni, Ni-P or Ni-B alloy was formed in a thickness of about 5 $\mu$m by sputtering or electroless plating method. Then, the intermediate layer 53 was machined precisely by a diamond tool into a desired shape.

Finally, as the surface protective layer 54, a thin film of platinum-rhodium-renium-tungsten (Pt-Rh-Re-W) alloy was formed in a thickness of about 3 $\mu$m on the precisely machined intermediate layer 53 so as not to deform the intermediate layer.

The machining time required for the precision machining, the die shape precision and surface roughness, and the manufacturing cost of each die assuming the manufacturing cost of the die obtained by direct precision machining of the base material 51 without forming the thin film 52 and the intermediate layer 53 to be 100% are summarized in Table 4.

In Table 4, (a), (b), (c), (d) and (e) refer to the machinability of the intermediate layer 53 of the dies whose base materials 51 are made of a cermet mainly composed of TiN, a cermet mainly composed of TiC, a cermet mainly composed of $Al_2O_3$, a cermet mainly composed of $Cr_3O_2$, and a cemented carbide mainly composed of WC, respectively.

16

## Table 4  Die Machinability

(a) Die with the base material made of cermet mainly composed of TiN

| Intermediate layer | | Machining time | Shape precision (rms) | Surface roughness (rms) | Cost |
|---|---|---|---|---|---|
| None | | 40 hr | 0.05 l | 40 Å | 100 % |
| Pt | | 12 | 0.04 | 30 | 37 |
| Au | | 4 | 0.02 | 25 | 15 |
| Cu | | 4 | 0.02 | 25 | 15 |
| Ni | | 5 | 0.02 | 25 | 17 |
| Pt-Au | 20wt.%Pt | 4.5 | 0.02 | 25 | 16 |
| | 60wt.%Pt | 6 | 0.02 | 25 | 20 |
| | 70wt.%Pt | 9 | 0.04 | 30 | 27 |
| Pt-Cu | 20wt.%Pt | 5 | 0.02 | 25 | 17 |
| | 60wt.%Pt | 6 | 0.02 | 25 | 20 |
| | 70wt.%Pt | 9 | 0.04 | 30 | 27 |
| Pt-Ni | 20wt.%Pt | 5 | 0.02 | 25 | 17 |
| | 60wt.%Pt | 6 | 0.02 | 25 | 20 |
| | 70wt.%Pt | 10 | 0.04 | 30 | 32 |
| Ni-P ( 5wt.%P) | | 4 | 0.02 | 25 | 15 |
| Ni-P (10wt.%P) | | 2 | 0.01 | 20 | 12 |
| Ni-B ( 5wt.%B) | | 4 | 0.02 | 25 | 15 |
| Ni-B (10wt.%B) | | 2 | 0.01 | 20 | 12 |

(measured at λ=633 nm)

## Table 4  Die Machinability

(b) Die with the base material made of cermet mainly composed of TiC

| Intermediate layer | | Machining time | Shape precision (rms) | Surface roughness (rms) | Cost |
|---|---|---|---|---|---|
| None | | 40 hr | 0.05 λ | 40 λ | 100 % |
| Pt | | 12 | 0.04 | 30 | 37 |
| Au | | 4 | 0.02 | 25 | 15 |
| Cu | | 4 | 0.02 | 25 | 15 |
| Ni | | 5 | 0.02 | 25 | 17 |
| Pt-Au | 20wt.%Pt | 4.5 | 0.02 | 25 | 16 |
| | 60wt.%Pt | 6 | 0.02 | 25 | 20 |
| | 70wt.%Pt | 9 | 0.04 | 30 | 27 |
| Pt-Cu | 20wt.%Pt | 5 | 0.02 | 25 | 17 |
| | 60wt.%Pt | 6 | 0.02 | 25 | 20 |
| | 70wt.%Pt | 9 | 0.04 | 30 | 27 |
| Pt-Ni | 20wt.%Pt | 5 | 0.02 | 25 | 17 |
| | 60wt.%Pt | 6 | 0.02 | 25 | 20 |
| | 70wt.%Pt | 10 | 0.04 | 30 | 32 |
| Ni-P ( 5wt.%P) | | 4 | 0.02 | 25 | 15 |
| Ni-P (10wt.%P) | | 2 | 0.01 | 20 | 12 |
| Ni-B ( 5wt.%B) | | 4 | 0.02 | 25 | 15 |
| Ni-B (10wt.%B) | | 2 | 0.01 | 20 | 12 |

(measured at $\lambda=633$ nm)

Table 4  Die Machinability

(c) Die with the base material made of cermet mainly composed of $Al_2O_3$

| Intermediate layer | | Machining time | Shape precision (rms) | Surface roughness (rms) | Cost |
|---|---|---|---|---|---|
| None | | 60hr | 0.08 $\lambda$ | 70 Å | 100 % |
| Pt | | 12 | 0.04 | 30 | 27 |
| Au | | 4 | 0.02 | 25 | 12 |
| Cu | | 4 | 0.02 | 25 | 12 |
| Ni | | 5 | 0.02 | 25 | 14 |
| Pt-Au | 20wt.%Pt | 4.5 | 0.02 | 25 | 13 |
| | 60wt.%Pt | 6 | 0.02 | 25 | 17 |
| | 70wt.%Pt | 9 | 0.04 | 30 | 22 |
| Pt-Cu | 20wt.%Pt | 5 | 0.02 | 25 | 14 |
| | 60wt.%Pt | 6 | 0.02 | 25 | 17 |
| | 70wt.%Pt | 9 | 0.04 | 30 | 22 |
| Pt-Ni | 20wt.%Pt | 5 | 0.02 | 25 | 14 |
| | 60wt.%Pt | 6 | 0.02 | 25 | 17 |
| | 70wt.%Pt | 10 | 0.04 | 30 | 25 |
| Ni-P ( 5wt.%P) | | 4 | 0.02 | 25 | 12 |
| Ni-P (10wt.%P) | | 2 | 0.01 | 20 | 9 |
| Ni-B ( 5wt.%B) | | 4 | 0.02 | 25 | 12 |
| Ni-B (10wt.%B) | | 2 | 0.01 | 20 | 9 |

(measured at $\lambda$=633 nm)

EP 0 404 481 B1

Table 4   Die Machinability

(d) Die with the base material made of cermet mainly composed of $Cr_3C_2$

| Intermediate layer | | Machining time | Shape precision (rms) | Surface roughness (rms) | Cost |
|---|---|---|---|---|---|
| None | | 60hr | 0.08 $l$ | 70 Å | 100 % |
| Pt | | 12 | 0.04 | 30 | 27 |
| Au | | 4 | 0.02 | 25 | 12 |
| Cu | | 4 | 0.02 | 25 | 12 |
| Ni | | 5 | 0.02 | 25 | 14 |
| Pt-Au | 20wt.%Pt | 4.5 | 0.02 | 25 | 13 |
| | 60wt.%Pt | 6 | 0.02 | 25 | 17 |
| | 70wt.%Pt | 9 | 0.04 | 30 | 22 |
| Pt-Cu | 20wt.%Pt | 5 | 0.02 | 25 . | 14 |
| | 60wt.%Pt | 6 | 0.02 | 25 | 17 |
| | 70wt.%Pt | 9 | 0.04 | 30 | 22 |
| Pt-Ni | 20wt.%Pt | 5 | 0.02 | 25 | 14 |
| | 60wt.%Pt | 6 | 0.02 | 25 | 17 |
| | 70wt.%Pt | 10 | 0.04 | 30 | 25 |
| Ni-P ( 5wt.%P) | | 4 | 0.02 | 25 | 12 |
| Ni-P (10wt.%P) | | 2 | 0.01 | 20 | 9 |
| Ni-B ( 5wt.%B) | | 4 | 0.02 | 25 | 12 |
| Ni-B (10wt.%B) | | 2 | 0.01 | 20 | 9 |

(measured at $\lambda$=633 nm)

20

## Table 4  Die Machinability

(e) Die with the base material made of cemented carbide mainly composed of WC.

| Intermediate layer | | Machining time | Shape precision (rms) | Surface roughness (rms) | Cost |
|---|---|---|---|---|---|
| None | | 40 hr | 0.05 l | 40 Å | 100 % |
| Pt | | 12 | 0.04 | 30 | 37 |
| Au | | 4 | 0.02 | 25 | 15 |
| Cu | | 4 | 0.02 | 25 | 15 |
| Ni | | 5 | 0.02 | 25 | 17 |
| Pt-Au | 20wt.%Pt | 4.5 | 0.02 | 25 | 16 |
| | 60wt.%Pt | 6 | 0.02 | 25 | 20 |
| | 70wt.%Pt | 9 | 0.04 | 30 | 27 |
| Pt-Cu | 20wt.%Pt | 5 | 0.02 | 25 | 17 |
| | 60wt.%Pt | 6 | 0.02 | 25 | 20 |
| | 70wt.%Pt | 9 | 0.04 | 30 | 27 |
| Pt-Ni | 20wt.%Pt | 5 | 0.02 | 25 | 17 |
| | 60wt.%Pt | 6 | 0.02 | 25 | 20 |
| | 70wt.%Pt | 10 | 0.04 | 30 | 32 |
| Ni-P ( 5wt.%P) | | 4 | 0.02 | 25 | 15 |
| Ni-P (10wt.%P) | | 2 | 0.01 | 20 | 12 |
| Ni-B ( 5wt.%B) | | 4 | 0.02 | 25 | 15 |
| Ni-B (10wt.%B) | | 2 | 0.01 | 20 | 12 |

(measured at $\lambda$=633 nm)

The machining time in Table 4 shows the time required for precision machining, and the shape precision and surface roughness are measured in the best surface conditions. As evident from Table 4, even if the base material 51 is changed, the machining time required for precision machining of the intermediate layer 53 remains constant depending on the material of the intermediate layer 53. The die manufacturing cost does not very so much depending on the material of the intermediate layer 53 or die structure, and it is known to be proportional to the machining time required for precision machining. That is, the die manufacturing cost is lower for the die made in shorter machining time. Therefore, the die manufacturing cost is smaller when Pt, Au, Cu, Ni, Pt-Au, Pt-Cu, Pt-Ni, Ni-P or Ni-B having an excellent machinability is used for the intermediate layer 53. It is known from Table 4 that the cost is 37% or less as compared with the conventional die obtained by direct precision machining of the base material 51 without forming the adhesion enhancing thin film 52 and intermediate layer 53 for precision machining. Thus, the die of the invention can be manufactured at a very low cost. The best one is the die using Ni-P (10 wt.% P) or Ni-B (10 wt.% B) thin film as the intermediate layer 53, in which the manufacturing cost is only 9% to 12% of that of the conventional die obtained by direct precision machining of the base material 51 without forming the adhesion enhancing thin film 52 and the intermediate layer 53 for precision machining.

The results of press-molding using the thus fabricated die are described below.

In the same way as in Embodiment 1, the upper and lower dies 43, 45 were mounted in the press-molding machine shown in Fig. 2, and a spherical glass 44 of 10 mm in radius composed of 70 wt.% of lead oxide (PbO), 27 wt.% of silica (SiO) and the rest of traces was placed on the lower die 45. The upper die 43 fixed to the upper fixing block 41 was put thereon. The temperature of the dies was raised to 520°C, and the glass 44 was pressed between the dies 43, 45 for 2 minutes with a press pressure of about 40 kg/cm$^2$ in a nitrogen atmosphere. Thereafter, the upper and lower dies were cooled to 300°C, and the press-formed aspherical glass lens was taken out of the die. By repeating this process, after finishing 30,000 times of press-molding operations, the upper die 43 was taken out of the press-molding machine, and the surface roughness (rms, Å) of the press surface was measured, and the die precision was evaluated.

The test results are shown in Table 5. The table shows the initial shape precision and initial surface roughness of each die right after manufactured, and the shape precision and surface roughness of each die after 30,000 times of press-moldings. In Table 5, (a), (b), (c), (d), (e) refer to the press test results by changing the material of the intermediate layer 53 of the dies whose base materials are made of a cermet mainly composed of TiN, a cermet mainly composed of TiC, a cermet mainly composed of $A1_2O_3$, a cermet mainly composed of $Cr_3C_2$, and a cemented carbide mainly composed of WC, respectively.

## Table 5   Press Test Results

(a) Die with the base material made of cermet mainly composed of TiN

| Intermediate layer | | Initial shape precision (rms) | Initial surface roughness (rms) | Shape precision after pressing (rms) | Surface roughness after pressing (rms) |
|---|---|---|---|---|---|
| Pt | | 0. 04 λ | 30 Å | 0. 04 λ | 30 Å |
| Au | | 0. 02 | 25 | 0. 02 | 25 |
| Cu | | 0. 02 | 25 | 0. 02 | 25 |
| Ni | | 0. 02 | 25 | 0. 02 | 25 |
| Pt-Au | 20wt.%Pt | 0. 02 | 25 | 0. 02 | 25 |
| | 60wt.%Pt | 0. 02 | 25 | 0. 02 | 25 |
| | 70wt.%Pt | 0. 04 | 30 | 0. 04 | 30 |
| Pt-Cu | 20wt.%Pt | 0. 02 | 25 | 0. 02 | 25 |
| | 60wt.%Pt | 0. 02 | 25 | 0. 02 | 25 |
| | 70wt.%Pt | 0. 04 | 30 | 0. 04 | 30 |
| Pt-Ni | 20wt.%Pt | 0. 02 | 25 | 0. 02 | 25 |
| | 60wt.%Pt | 0. 02 | 25 | 0. 02 | 25 |
| | 70wt.%Pt | 0. 04 | 30 | 0. 04 | 30 |
| Ni-P ( 5wt.%P) | | 0. 02 | 25 | 0. 02 | 25 |
| Ni-P (10wt.%P) | | 0. 01 | 20 | 0. 01 | 20 |
| Ni-B ( 5wt.%B) | | 0. 02 | 25 | 0. 02 | 25 |
| Ni-B (10wt.%B) | | 0. 01 | 20 | 0. 01 | 20 |

(measured at λ=633 nm)

23

EP 0 404 481 B1

## Table 5   Press Test Results

(b) Die with the base material made of cermet mainly composed of TiC

| Intermediate layer | | Initial shape precision (rms) | Initial surface roughness (rms) | Shape precision after pressing (rms) | Surface roughness after pressing (rms) |
|---|---|---|---|---|---|
| Pt | | 0.04 λ | 30 Å | 0.04 λ | 30 Å |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at λ=633 nm)

24

## Table 5  Press Test Results

(c) Die with the base material made of cermet mainly composed of $Al_2O_3$

| Intermediate layer | | Initial shape precision (rms) | Initial surface roughness (rms) | Shape precision after pressing (rms) | Surface roughness after pressing (rms) |
|---|---|---|---|---|---|
| Pt | | 0.04 $\lambda$ | 30 Å | 0.04 $\lambda$ | 30 Å |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at $\lambda$=633 nm)

25

## Table 5  Press Test Results

(d) Die with the base material made of cermet mainly composed of $Cr_3C_2$

| Intermediate layer | | Initial shape precision (rms) | Initial surface roughness (rms) | Shape precision after pressing (rms) | Surface roughness after pressing (rms) |
|---|---|---|---|---|---|
| Pt | | 0.04 λ | 30 Å | 0.04 λ | 30 Å |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

(measured at λ=633 nm)

## Table 5   Press Test Results

### (e) Die with the base material made of cemented carbide mainly composed of WC.

| Intermediate layer | | Initial shape precision (rms) | Initial surface roughness (rms) | Shape precision after pressing (rms) | Surface roughness after pressing (rms) |
|---|---|---|---|---|---|
| Pt | | 0.04 $l$ | 30 Å | 0.04 $l$ | 30 Å |
| Au | | 0.02 | 25 | 0.02 | 25 |
| Cu | | 0.02 | 25 | 0.02 | 25 |
| Ni | | 0.02 | 25 | 0.02 | 25 |
| Pt-Au | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Cu | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Pt-Ni | 20wt.%Pt | 0.02 | 25 | 0.02 | 25 |
| | 60wt.%Pt | 0.02 | 25 | 0.02 | 25 |
| | 70wt.%Pt | 0.04 | 30 | 0.04 | 30 |
| Ni-P ( 5wt.%P) | | 0.02 | 25 | 0.02 | 25 |
| Ni-P (10wt.%P) | | 0.01 | 20 | 0.01 | 20 |
| Ni-B ( 5wt.%B) | | 0.02 | 25 | 0.02 | 25 |
| Ni-B (10wt.%B) | | 0.01 | 20 | 0.01 | 20 |

### (measured at $\lambda$=633 nm)

As clear from Table 5, in each die, degradation of the die surface was not observed even after 30,000 times of press-moldings, and it is known that the die life was extended notably. When the thin film 52 which is a Ni-Co alloy thin film is inserted between the base material 51 and the intermediate layer 53, the die life is at least about 3 times longer as compared with the die without the thin film 52.

Thus, the dies according to Embodiment 2 were extremely extended in the life, while the die manufacturing cost was almost the same as that of the conventional die without the thin film 52. Therefore, by press-molding using the die of the invention, optical elements can be manufactured at lower cost and in larger quantity.

As described above, according to this invention, by using a material excellent in heat resistance, heat shock resistance and strength at high temperature as the base material, roughly machining the base material, forming an intermediate layer excellent in cutting and grinding machinability on the roughly machined base material, precisely machining the intermediate layer, and finally forming, as a surface protective layer, a metal thin film comprising at least one of Pt, Pd, Ir, Rh, Os, Ru, Re, W and Ta, being

27

resistant to heat and excellent in mechanical strength, not reacting with glass even at high temperature, the manufacturing time and cost of the die are extremely reduced, and optical elements with high precision can be mass-produced at low cost by press-molding using the die.

Furthermore, by inserting a thin film for enhancing the adhesion between the base material and the intermediate layer, the die life is extremely extended.

In the foregoing embodiments, the surface protective layer was either Ir-Ru-Ta or Pt-Rh-Re-W alloy thin film, but the same effects will be obtained by using any other metal thin film comprising at least one member selected from the group consisting of Pt, Pd, Ir, Rh, Os, Ru, Re, W and Ta.

In Embodiment 2, meanwhile, only the Ni-Co alloy thin film was presented as the film for enhancing the adhesion, but any other material may be used as far as effective to enhance the adhesion between the base material and the intermediate layer.

The embodiments related to the fabrication method of aspherical glass lens, but, needless to say, optical elements in any other shapes suited to machining, such as diffraction gratings, for example, may be similarly mass-produced easily by press-molding using the press-molding die of the invention.

## Claims

1. A die for press-molding an optical element, comprising: a base material (31, 51) made of a material excellent in heat resistance, heat shock resistance and strength at high temperature; an intermediate layer (32, 53) excellent in grinding machinability and cutting machinability, formed on the base material; and a surface protective layer (33, 54) made of a metal thin film excellent in heat resistance and strength at high temperature and less reactive to a material of the optical element, formed on the intermediate layer; characterized in that the intermediate layer comprises a Ni-P alloy or Ni-B alloy thin film.

2. A die as claimed in claim 1, wherein the base material (31, 51) comprises a cemented carbide mainly composed of WC or a cermet mainly composed of TiN, TiC, $Al_2O_3$ or $Cr_3C_2$.

3. A die as claimed in claim 1, wherein the surface protective layer (33, 54) is a metal thin film comprising at least one member selected from the group consisting of Pt, Pd, Ir, Rh, Os, Ru, Re, W and Ta.

4. A die as claimed in claim 1, wherein the intermediate layer (32, 53) is a Ni-P alloy or Ni-B alloy thin film with a Ni content of 90 wt.% or more.

5. A die as claimed in any preceding claim, further comprising a thin film (52) formed on the base material (51) for enhancing adhesion strength between the base material and the intermediate layer (53) formed on the thin film.

6. A die as claimed in claim 5, wherein the thin film (52) for enhancing the adhesion strength between the base material (51) and the intermediate layer (53) comprises a metal, carbide, nitride or oxide thin film.

7. A method of press-molding an optical element with a pair of dies (48, 49) by heating and pressing a material (44) of the optical element between the pair of dies, wherein each of the dies comprises: a base material (31, 51) made of a material excellent in heat resistance, heat shock resistance and strength at high temperature; an intermediate layer (32, 53) made of a Ni-P alloy or Ni-B alloy thin film excellent in grinding machinability and cutting machinability, formed on the base material; and a surface protective layer (33, 54) made of a metal thin film excellent in heat resistance and strength at high temperature and less reactive to the material of the optical element, formed on the intermediate layer.

8. A method of press-molding an optical element as claimed in claim 7, wherein each of the dies (48, 49) additionally comprises a thin film (52) formed on the base material (51) for enhancing adhesion strength between the base material the intermediate layer (53).

## Patentansprüche

1. Eine Preßform zum Pressen eines optischen Elements, umfassend: ein Basismaterial (31, 51), das aus einem Material hergestellt ist, das eine ausgezeichnete Wärmebeständigkeit, Wärmeschockbeständigkeit und Festigkeit bei hoher Temperatur hat; eine Zwischenschicht (32, 53) mit ausgezeichneter Schleifbearbeitbarkeit und Schneidebearbeitbarkeit, die auf dem Basismaterial gebildet ist; und eine Oberflächenschutzschicht (33, 54), die aus einer dünnen Metallschicht mit ausgezeichneter Hitzebeständigkeit und Festigkeit bei hoher Temperatur und mit geringerem Reaktionsvermögen mit einem Material des optischen Elements hergestellt und auf der Zwischenschicht gebildet ist; **dadurch gekennzeichnet**, daß die Zwischenschicht eine dünne Schicht aus einer Ni-P Legierung oder Ni-B Legierung umfaßt.

2. Eine Preßform, wie in Anspruch 1 beansprucht, bei der das Basismaterial (31, 51) ein Sinterkarbid, das hauptsächlich aus WC zusammengesetzt ist, oder eine Keramik-Metall Kombination umfaßt, die hauptsächlich aus TiN, TiC, $Al_2O_3$ oder $Cr_3C_2$ zusammengesetzt ist.

3. Ein Preßform, wie in Anspruch 1 beansprucht, in der die Oberflächenschutzschicht (33, 54) eine dünne Metallschicht ist, die wenigstens einen Bestandteil umfaßt, der aus der Gruppe ausgewählt ist, die aus Pt, Pd, Ir, Rh, Os, Ru, Re, W und Ta besteht.

4. Eine Preßform, wie in Anspruch 1 beansprucht, bei der die Zwischenschicht (32, 53) eine dünne Schicht aus einer Ni-P Legierung oder einer Ni-B Legierung mit einem Ni Anteil von 90 Gew.-% oder mehr ist.

5. Eine Preßform, wie in irgendeinem vorhergehenden Anspruch beansprucht, die ferner eine dünne Schicht (52) umfaßt, die auf dem Basismaterial (51) zum Verstärken der Adhäsionsfestigkeit zwischen dem Basismaterial und der Zwischenschicht (53) gebildet ist, die auf der dünnen Schicht gebildet ist.

6. Eine Preßform, wie in Anspruch 5 beansprucht, bei der die dünne Schicht (52) zum Verstärken der Adhäsionsfestigkeit zwischen dem Basismaterial (51) und der Zwischenschicht (53) eine dünne Schicht aus Metall, Karbid, Nitrid oder Oxid umfaßt.

7. Ein Verfahren zum Pressen eines optischen Elements mit einem Paar Preßformen (48, 49) durch Erwärmen und Pressen eines Materials (44) des optischen Elements zwischen dem Paar Preßformen, wobei jede der Preßformen umfaßt: ein Basismaterial (31, 51), das aus einem Material mit ausgezeichneter Wärmebeständigkeit, Wärmeschockbeständigkeit und Festigkeit bei hoher Temperatur hergestellt ist; eine Zwischenschicht (32, 53) aus einer dünnen Schicht aus einer Ni-P Legierung oder einer Ni-B Legierung mit ausgezeichneter Schleifbearbeitbarkeit und Schneidebearbeitbarkeit, die auf dem Basismaterial gebildet ist; und eine Oberflächenschutzschicht (33, 54), die aus einer dünnen Metallschicht mit ausgezeichneter Hitzebeständigkeit und Festigkeit bei hoher Temperatur und mit geringerem Reaktionsvermögen mit einem Material des optischen Elements hergestellt und auf der Zwischenschicht gebildet ist;

8. Ein Verfahren zum Fressen eines optischen Elements, wie in Anspruch 7 beansprucht, bei dem jede der Preßformen (48, 49) zusätzlich eine dünne Schicht (52) umfaßt, die auf dem Basismaterial (51) zum Verstärken der Adhäsionsfestigkeit zwischen dem Basismaterial und der Zwischenschicht (53) gebildet ist.

**Revendications**

1. Moule de moulage par pressage d'un élément optique, comprenant un matériau de base (31, 51) formé d'un matériau ayant une excellente résistance à la chaleur, une excellente résistance au choc thermique et une excellente résistance mécanique à température élevée, une couche intermédiaire (32, 53) ayant une excellente usinabilité par rectification et usinabilité par coupe, formée sur le matériau de base, et une couche protectrice (33, 54) de surface formée d'un film métallique mince ayant d'excellentes propriétés de résistance à la chaleur et de résistance mécanique à température élevée et réagissant peu à un matériau d'élément optique, formée sur la couche intermédiaire, caractérisé en ce que la couche intermédiaire comporte un film mince d'un alliage de Ni-P ou Ni-B.

2. Moule selon la revendication 1, dans lequel le matériau de base (31, 51) est un carbure fritté essentiellement composé de WC ou un cermet essentiellement composé de TiN, TiC, $Al_2O_3$ ou $Cr_3C_2$.

**3.** Moule selon la revendication 1, dans lequel la couche protectrice (33, 54) de surface est un film métallique mince contenant au moins un élément choisi dans le groupe qui comprend Pt, Pd, Ir, Rh, Os, Ru, Re, W et Ta.

**4.** Moule selon la revendication 1, dans lequel la couche intermédiaire (32, 53) est un film mince d'alliage de Ni-P ou d'alliage de Ni-B ayant une teneur en Ni supérieure ou égale à 90 % en poids.

**5.** Moule selon l'une quelconque des revendications précédentes, comprenant en outre un film mince (52) formé sur le matériau de base (51) et destiné à accroître la résistance d'adhérence entre le matériau de base et la couche intermédiaire (53) formée sur le film mince.

**6.** Moule selon la revendication 5, dans lequel le film mince (52) destiné à accroître la résistance d'adhérence entre le matériau de base (51) et la couche intermédiaire (53) est un film mince d'un métal, d'un carbure, d'un nitrure ou d'un oxyde.

**7.** Procédé de moulage par pressage d'un élément optique à l'aide d'une paire de moules (48, 49) par chauffage et pressage d'un matériau (44) de l'élément optique entre les deux moules, dans lequel chacun des moules comprend un matériau de base (31, 51) formé d'un matériau ayant d'excellentes propriétés de résistance à la chaleur, de résistance au choc thermique et de résistance mécanique à température élevée, une couche intermédiaire (32, 53) formée d'un film mince d'un alliage de Ni-P ou d'un alliage de Ni-B ayant d'excellentes propriétés d'usinabilité par rectification et d'usinabilité de coupe, formée sur le matériau de base, et une couche protectrice (33, 54) de surface formée d'un film métallique mince ayant d'excellentes propriétés de résistance à la chaleur et de résistance mécanique à température élevée et réagissant peu avec le matériau de l'élément optique formé sur la couche intermédiaire.

**8.** Procédé de moulage par pressage d'un élément optique selon la revendication 7, dans lequel chacun des moules (48, 49) comporte en outre un film mince (52) formé sur le matériau de base (51) afin qu'il augmente la résistance d'adhérence entre le matériau de base et la couche intermédiaire (53).

**FIG.1**  PRIOR ART

**FIG.2**   PRIOR ART

EP 0 404 481 B1

33 32

31

FIG.3

33

FIG.4

54 53 52

51

# FIG.5